# FASCICULE DE BREVET EUROPEEN

(11) **EP 2 216 214 B1**
(45) Date de publication et mention de la délivrance du brevet: **22.08.2012**
(21) Numéro de dépôt: 10153191.1
(22) Date de dépôt: 10.02.2010
(51) Int. Cl.: B60R 22/26

(54) **Dispositif de verrouillage pour ceinture de sécurité de véhicule**
Verriegelungsvorrichtung eines Sicherheitsgurtes für Kraftfahrzeug
Locking device for a vehicle safety belt

(30) Priorité: 10.02.2009 FR 0950806
(43) Date de publication de la demande: 11.08.2010
(73) Titulaire: Peugeot Citroën Automobiles SA, 78140 Vélizy-Villacoublay (FR)
(72) Inventeur: Oudart, Fabrice, 25700, VALENTIGNEY (FR)

(56) Documents cités:
- DE-A1-102006 043 161
- FR-A- 2 919 247
- US-A1- 2002 113 423

## Description

La présente invention est relative aux dispositifs de verrouillage pour ceinture de sécurité de véhicule, notamment de véhicule automobile.

Plus particulièrement, l'invention concerne un tel dispositif comportant un boîtier destiné à recevoir et verrouiller un pêne de la ceinture de sécurité et qui comporte une partie permettant la fixation du boîtier à un support solidaire de la structure d'un siège de véhicule ou solidaire du plancher de ce véhicule.

Un dispositif de ce type est connu du document US20020113423 qui correspond un préambule de la revendication et dans lequel la partie permettant la fixation du boîtier est une partie d'une plaque en forme générale de bielle dont une extrémité libre est prévue pour être fixée à une structure de siège.

Un problème se pose quand un tel dispositif doit être indifféremment monté soit à gauche soit à droite d'un siège, car généralement, le boîtier doit être disposé en ayant un bord déterminé côté siège, à savoir son bord adjacent à une fente de passage de pêne de ceinture. Le bord opposé du boîtier, situé vers l'extérieur par rapport au siège, est adjacent à un bouton de déverrouillage du pêne. Un problème se pose si la plaque est montée en sens inverse, car dans ce cas, c'est le bouton qui est côté siège et la fente qui est vers l'extérieur du siège, si bien que l'accès au bouton est rendu difficile quand le pêne est verrouillé. De plus, comme le pêne ne peut être verrouillé dans le boîtier que dans un sens déterminé, un montage inversé du dispositif nécessite de vriller la sangle de ceinture le long du thorax et du ventre d'un utilisateur du siège, au détriment du confort.

Selon un autre art antérieur décrit dans le document DE102006043161, le dispositif de verrouillage de ceinture de sécurité de véhicule comprend un boîtier destiné à recevoir et verrouiller un pêne de ceinture de sécurité et qui comporte également une un support de fixation du boîtier solidaire de la structure de l'assise du siège. La partie de fixation du boîtier comprenant des moyens détrompeurs. Ces moyens détrompeurs consistants en une encoche plate et un trou cylindrique coopérant avec des formes complémentaires du support permettant de disposer la partie de fixation dans une position unique relativement au support. Le montage du boîtier sur son support nécessite néanmoins un ajustement et un assemblage précis et délicat des pièces entre elles. De cette façon, le boîtier est embarqué avec le siège lorsque celui-ci est déplacé de l'avant vers l'arrière du véhicule et inversement.

La présente invention a notamment pour but de remédier aux inconvénients de l'art antérieur en permettant le montage du boîtier facilement et rapidement.

A cet effet, l'invention a pour objet un dispositif de verrouillage pour ceinture de sécurité de véhicule, comportant un boîtier destiné à recevoir et verrouiller un pêne de la ceinture de sécurité et qui comporte une partie permettant la fixation du boîtier à un support solidaire de la structure d'un siège de véhicule ou solidaire du plancher de ce véhicule. La partie de fixation du boîtier comprend un moyen détrompeur permettant de disposer la partie de fixation relativement au support à une position unique autorisant la fixation au support et à laquelle le boîtier est correctement orienté pour l'introduction et le verrouillage du pêne, la partie de fixation comporte également d'un côté une face d'appui destinée à venir en appui sur une face correspondante du support lors de la fixation de la partie au support, et le moyen détrompeur comprend au moins un organe faisant saillie d'un côté de la partie de fixation opposé au côté ayant la face d'appui et empêchant la fixation au support par retournement de la partie de fixation, une patte de positionnement angulaire de la partie de fixation relativement au support fait saillie de la face d'appui et peut s'engager dans un logement, par exemple une encoche, aménagé dans le support;

Dans divers modes de réalisation selon l'invention, on peut éventuellement avoir recours en outre à l'une et/ou à l'autre des dispositions suivantes :
- la partie de fixation est une plaque plane et l'organe en saillie est une patte faisant saillie de la face de la plaque opposée à la face de la plaque destinée à venir en appui sur le support ;
- la patte fait saillie de la plaque sensiblement perpendiculairement à celle-ci ;
- l'organe en saillie comporte deux pattes faisant saillie du même côté de la plaque de fixation sensiblement perpendiculairement à celle-ci ;
- la partie de fixation peut être fixée au support par une vis qui traverse un perçage de passage de vis aménagé dans la partie de fixation et qui est ancrée au support ;
- le moyen détrompeur est à proximité du perçage de passage de vis aménagé dans la partie de fixation ;
- le boîtier est solidaire de la partie de fixation par l'intermédiaire d'une tige.

Par ailleurs, l'invention a également pour objet un siège de véhicule, **caractérisé en ce que** sa structure d'assise comporte un support équipé d'un dispositif de verrouillage pour ceinture de sécurité conforme à l'invention.

Par ailleurs, l'invention a également pour objet un véhicule, notamment véhicule automobile, **caractérisé en ce qu**'il comporte au moins un siège conforme à l'invention, dont le dispositif de verrouillage est latéral au siège du côté du milieu du véhicule.

D'autres buts, caractéristiques et avantages de l'invention apparaîtront au cours de la description suivante d'un de ses modes de réalisation, donné à titre d'exemple non limitatif, en regard des dessins joints.

Sur les dessins :
- la figure 1 est une vue en trois dimensions de sièges selon l'invention ;
- la figure 2 est une vue en perspective de deux dispositifs de verrouillage pour pêne de ceinture de sécurité selon l'invention, tels qu'installés dans les sièges de la figure 1 ;

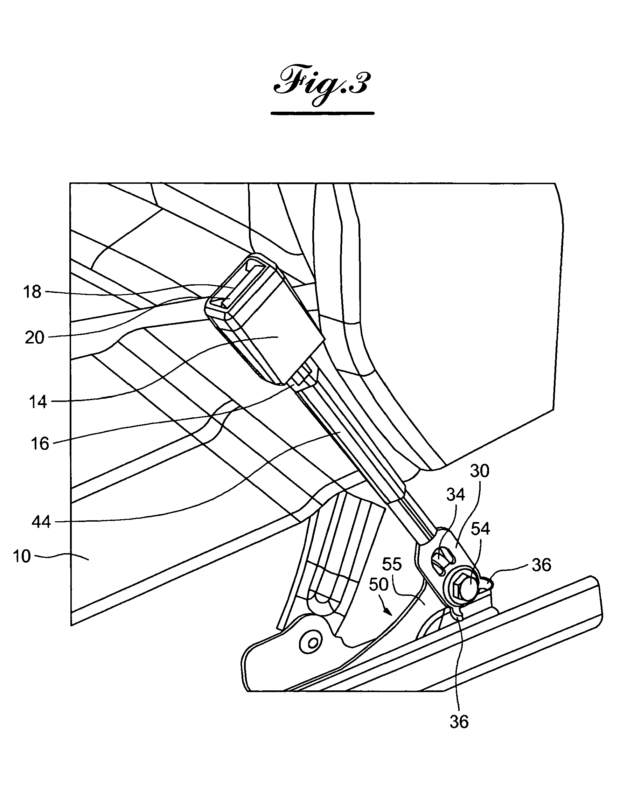

- la figure 3 est une vue en perspective montrant en détail le montage d'un dispositif de verrouillage dans le siège représenté à gauche à la figure 1 ;
- la figure 4 est une vue en perspective montrant un détail d'un dispositif de verrouillage représenté à la figure 2 ;
- la figure 5 est une vue en perspective montrant un détail de montage du dispositif de verrouillage dans le siège représenté à la figure 3 ;
- les figures 6 et 7 sont des vues en perspective montrant un dispositif de verrouillage selon l'invention positionné de façon erronée en cours de montage dans un siège du type de celui représenté à la figure 3.

Sur les différentes figures, les mêmes références désignent des éléments identiques ou similaires.

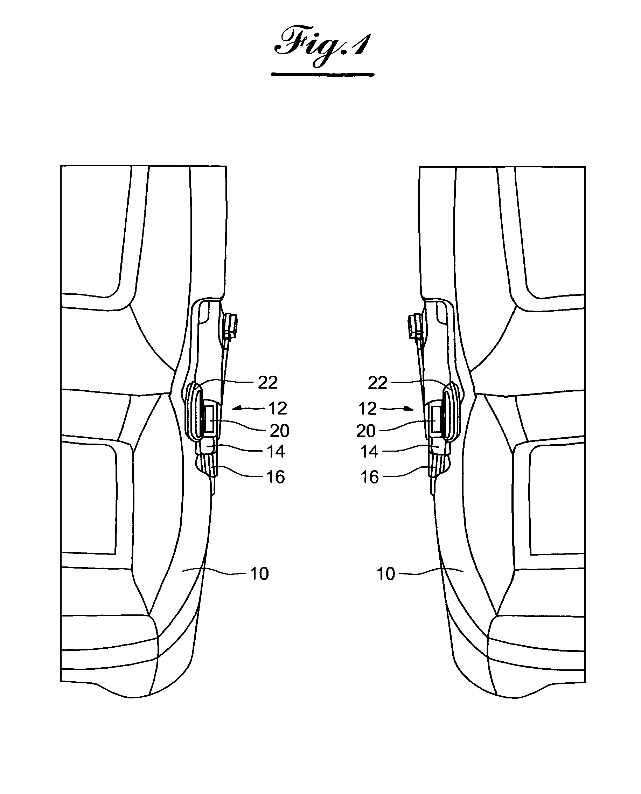

La figure 1 représente deux sièges avant 10 tels que montés dans un habitacle de véhicule. Chaque siège 10 comporte latéralement vers le centre de l'habitacle un dispositif 12 de verrouillage de pêne de ceinture. Chaque dispositif 12 comporte un boîtier 14 et une tige 16 qui est rattachée au boîtier 14 à une extrémité supérieure et qui, à son extrémité inférieure, est vissée à un support solidaire de la structure du siège 10.

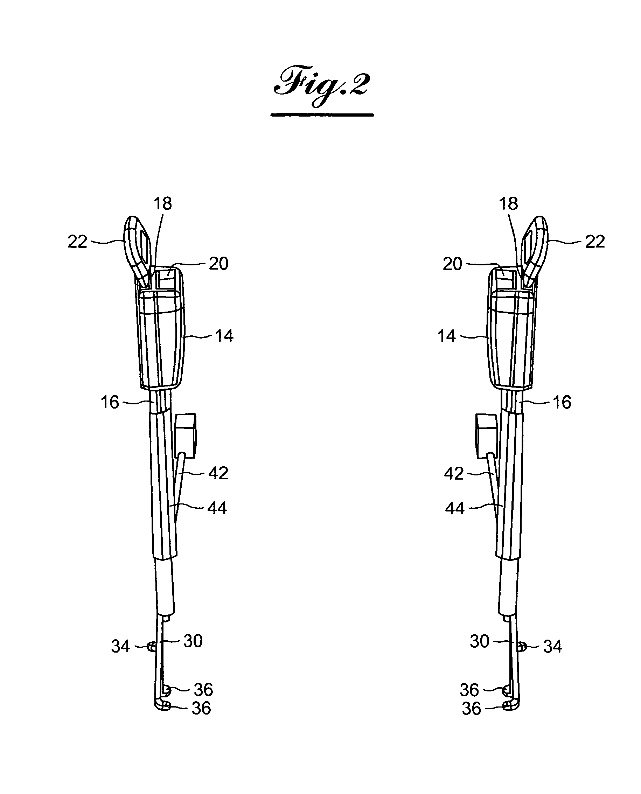

Aux figures 1 et 2, chaque boîtier 14 comporte classiquement une fente de passage de pêne 18 et un bouton 20 de déverrouillage du pêne. Les dispositifs 12 sont représentés avec un pêne 22 engagé dans la fente 18 et verrouillé dans le boîtier 14, sans représenter la ceinture qui passe normalement dans le pêne 22.

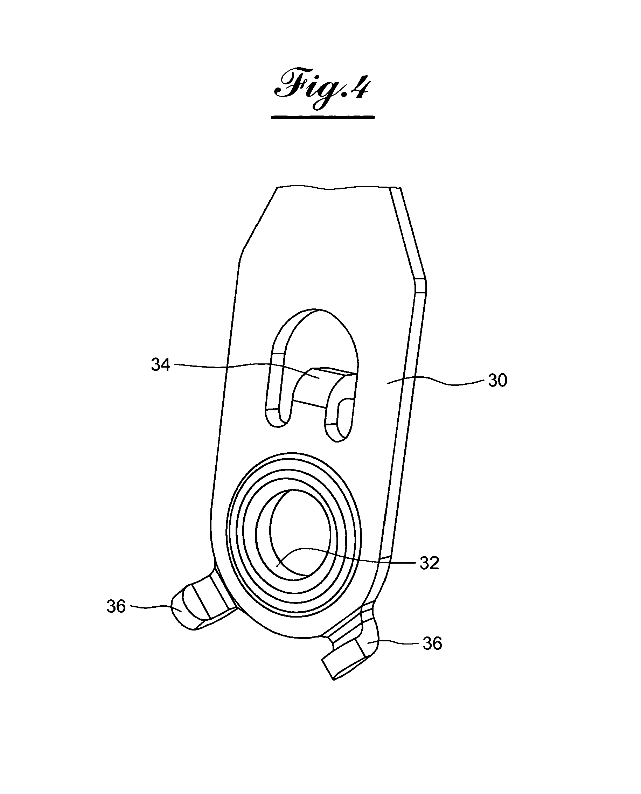

La tige 16 comporte à son extrémité inférieure une partie de fixation formée par une plaque métallique 30 dont le bas délimite un perçage de passage de vis 32 (figure 4). Aux alentours du perçage 32, la partie de fixation 30 comporte une patte de positionnement angulaire 34 et deux détrompeurs 36.

La patte de positionnement angulaire 34 s'étend sensiblement perpendiculairement à la plaque, en saillie de l'une des faces principales planes de la plaque.

Les détrompeurs 36 sont formés par des pattes solidaires de la plaque et s'étendent sensiblement perpendiculairement à la plaque, à partir de la tranche inférieure de la plaque, en saillie de l'autre des faces principales planes de la plaque.

La patte de positionnement angulaire 34 et les détrompeurs 36 s'étendent donc dans des directions opposées par rapport au plan de symétrie de la partie de fixation 30. Ils ont leur extrémité libre arrondie.

Un câble 42 est raccordé à des composants situés à l'intérieur du boîtier 14, suit la tige 16 sur sa partie médiane, en étant recouvert par exemple par un cache 44, et s'étend vers l'arrière pour être raccordé au réseau du véhicule.

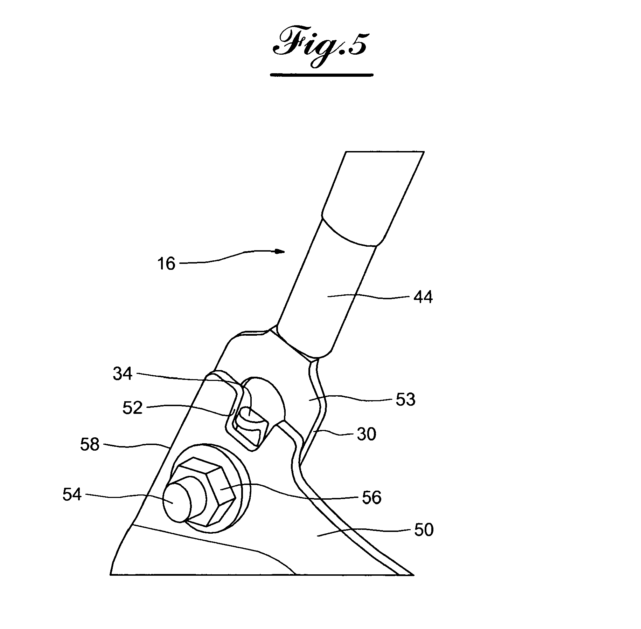

La structure du siège 10 comporte, à proximité du plancher du véhicule, un support de fixation de la tige 16. Le support comporte un flasque vertical 50 qui s'étend latéralement vers l'arrière du siège 10. Le flasque 50 comporte un perçage de passage de vis et, au dessus de ce dernier, une encoche de butée angulaire 52 (figure 5) dont la largeur est supérieure à la largeur de la patte de positionnement angulaire 34.

Sur le pourtour de son perçage de passage de vis, le flasque 50 présente une face externe sensiblement plane.

Le montage de la tige 16 équipée de son boîtier 14 sur le flasque 50 est effectué de la manière suivante.

La partie de fixation 30 est approchée du flasque 50 en disposant la patte de positionnement angulaire 34 en regard de l'encoche 52 et en engageant la patte dans l'encoche, jusqu'à appui plan d'une face 53 de la partie de fixation sur une face plane correspondante 55 du flasque 50. L'arrondi de la patte facilite cet engagement. Le perçage de passage de vis 32 de la partie de fixation est positionné coaxialement avec le perçage de passage de vis du flasque 50. La patte de positionnement angulaire 34 et l'encoche 52 logeant cette dernière permettent une orientation correcte de la tige par rapport à la structure du siège.

Dans cette position de fixation, la face principale plane de la plaque en saillie de laquelle s'étend la patte de positionnement angulaire 34 constitue un plan d'appui de la portion de fixation sur le flasque. Les détrompeurs 36 sont dirigés vers extérieur du siège et n'entrent pas en contact avec le flasque 50.

Une vis 54 est insérée dans les perçages de passage de vis et est vissée dans un écrou 56 solidaire du flasque coaxialement au perçage de passage de vis de ce dernier.

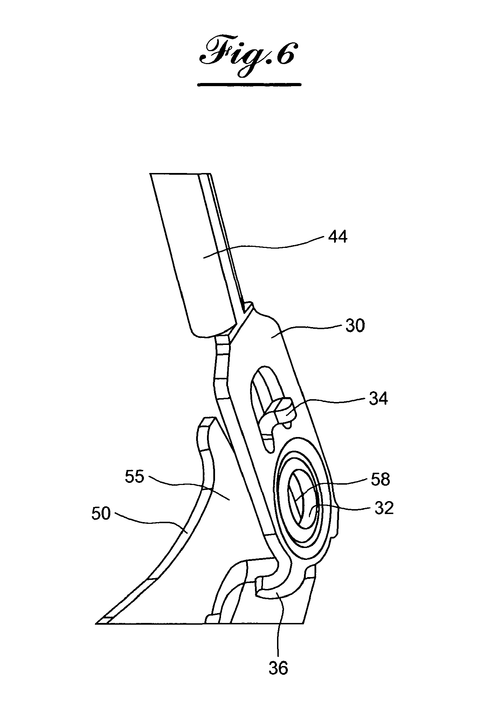

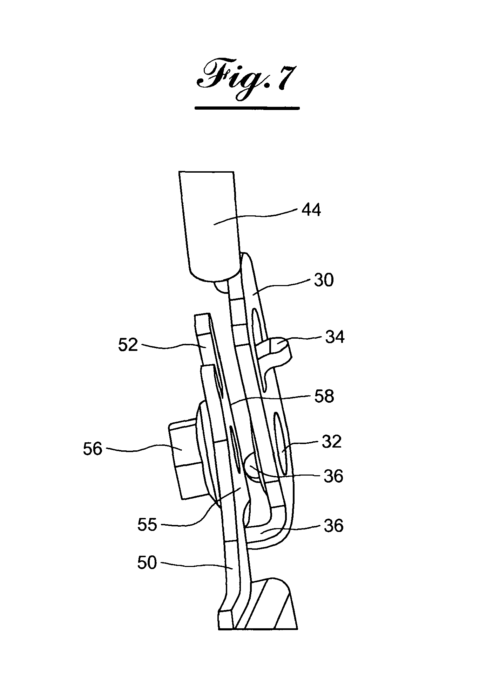

Dans le cas d'une tentative de montage inversé de la tige, comme représenté sur les figures 6 et 7, les détrompeurs 36 en saillie de la plaque formant la partie de fixation 30 de la tige 16 entrent en contact avec la portion du flasque 50 située sous son perçage de passage de vis. Les détrompeurs 36, situés à proximité du perçage, empêchent l'appui plan de la plaque sur le flasque 50 et rendent l'alignement des perçages de passage de vis très malaisé. En effet, les détrompeurs ont tendance à glisser sur le flasque, du fait de leur extrémité libre arrondie. En particulier, l'un des détrompeurs a tendance à glisser sur la tranche arrière 58 du flasque 50. De ce fait, un opérateur tentant de monter la tige de façon erronée s'aperçoit de l'erreur de positionnement et il lui suffit retourner la tige selon son plan médian de symétrie pour pouvoir effectuer le montage correct dans la position normale de fixation de la tige, sans devoir effectuer de démontage de pièce.

Avantageusement, les détrompeurs 36 permettent d'éviter un montage inversé de la tige 16, c'est-à-dire un montage selon lequel le bouton 20 est côté siège au lieu de la fente 18. Le bon positionnement angulaire de la tige est ainsi garanti, évitant que la tige puisse être positionnée au ras du sol. Le positionnement de la fente du boîtier côté siège est aussi garanti.

Avantageusement, un dispositif de verrouillage pour pêne de ceinture tel que décrit ci-dessus, comportant la tige 16 équipée de son boîtier 14, peut être utilisé indifféremment pour un siège droit ou un siège gauche, en ayant sa fente côté siège et en étant positionné vers le centre de l'habitacle.

Dans des variantes de réalisation non représentées, les détrompeurs et la patte de positionnement angulaire peuvent être agencés différemment en ayant par exemple une forme différente permettant d'exercer la même fonction. Par exemple, la patte de positionnement angulaire peut être sur le flasque solidaire de la structure du siège et s'engager dans un logement correspondant, tel qu'un perçage, aménagé dans la partie de fixation de la tige.

Dans la description qui précède, le dispositif de verrouillage selon l'invention a été décrit en relation avec un siège avant, mais il peut aussi être installé en relation avec un siège arrière. De plus, en variante, par exemple pour un siège arrière, le dispositif comporte une sangle de longueur relativement courte interposée entre un boîtier et une partie de fixation du type de celle décrite ci-dessus fixée directement au plancher du véhicule.

## Revendications

1. Dispositif de verrouillage pour ceinture de sécurité de véhicule, notamment de véhicule automobile, comportant un boîtier (14) destiné à recevoir et verrouiller un pêne (22) de la ceinture de sécurité et qui comporte une partie (30) permettant la fixation du boîtier (14) à un support (50) solidaire de la structure d'un siège (10) de véhicule ou solidaire du plancher de ce véhicule, la partie (30) de fixation du boîtier comprenant un moyen détrompeur (36) permettant de disposer la partie de fixation (30) relativement au support (50) à une position unique autorisant la fixation au support (50) et à laquelle le boîtier (14) est correctement orienté pour l'introduction et le verrouillage du pêne (22), la partie de fixation (30) comportant d'un côté une face d'appui (53) destinée à venir en appui sur une face (55) correspondante du support (50) lors de la fixation de la partie (30) au support (50) et **en ce que** le moyen détrompeur (36) comprend au moins un organe faisant saillie d'un côté de la partie de fixation (30) opposé au côté ayant la face d'appui (53) et empêchant la fixation au support (50) par retournement de la partie de fixation (30) **caractérisé en ce qu'**il comporte une patte de positionnement angulaire (34) de la partie de fixation (30) relativement au support (50), faisant saillie de la face d'appui (53) et pouvant s'engager dans un logement (52) aménagé dans le support (50).

2. Dispositif selon la revendication 1, **caractérisé en ce que** la partie de fixation (30) est une plaque plane (50) et **en ce que** l'organe en saillie (36) est une patte faisant saillie de la face de la plaque opposée à la face (53) de la plaque destinée à venir en appui sur le support (50).

3. Dispositif selon la revendication précédente, **caractérisé en ce que** la patte (36) fait saillie de la plaque (30) sensiblement perpendiculairement à celle-ci.

4. Dispositif selon l'une quelconque des revendications 2 à 3, **caractérisé en ce que** l'organe en saillie (36) comporte deux pattes faisant saillie du même côté de la plaque de fixation (30) sensiblement perpendiculairement à celle-ci.

5. Dispositif selon l'une quelconque des revendications précédentes, **caractérisé en ce que** la partie de fixation (30) peut être fixée au support (50) par une vis (54) qui traverse un perçage de passage de vis aménagé dans la partie de fixation et qui est ancrée au support.

6. Dispositif selon la revendication précédente, **caractérisé en ce que** le moyen détrompeur (36) est à proximité du perçage (32) de passage de vis aménagé dans la partie de fixation (30).

7. Siège de véhicule, **caractérisé en ce que** sa structure d'assise comporte un support (50) équipé d'un dispositif de verrouillage pour ceinture de sécurité conforme à l'une quelconque des revendications précédentes.

8. Véhicule, notamment véhicule automobile, **caractérisé en ce qu'**il comporte au moins un siège (10) conforme à la revendication précédente, dont le dispositif de verrouillage est latéral au siège du côté du milieu du véhicule.

## Claims

1. Locking device for a vehicle safety belt, in particular for a motor car, comprising a housing (14) intended to receive and lock a latch (22) on the safety belt and which comprises a part (30) enabling the housing (14) to be fixed to a support (50) secured to the structure of a vehicle seat (10) or secured to the floor of this vehicle, the part (30) fixing the housing comprising a positive-location means (36) enabling the fixing part (30) to be placed relative to the support (50) at a unique position enabling fixing to the support (50) and at which the housing (14) is correctly oriented for the insertion and locking of the latch (22), the fixing part (30) comprising on one side a bearing face (53) intended to come into abutment on a corresponding face (55) of the support (50) when the part (30) is fixed to the support (50) and in that the positive-location means (36) comprises at least one member projecting on a side of the fixing part (30) opposite to the side having the bearing face (53) and preventing the fixing to the support (50) by turning over of the fixing part (30), **characterised in that** it comprises a lug (34) for the angular positioning of the fixing part (30) relative to the support (50), projecting from the bearing face (53) and being able to engage in a recess (52) provided in the support (50).

2. Device according to claim 1, **characterised in that** the fixing part (30) is a flat plate (50) and **in that** the projecting member (36) is a lug projecting from the face of the plate opposite to the face (53) of the plate intended to come into abutment on the support (50).

3. Device according to the preceding claim, **characterised in that** the lug (36) projects from the plate (30) substantially perpendicular thereto.

4. Device according to either one of claims 2 to 3, **characterised in that** the protecting member (36) comprises two lugs projecting on the same side of the fixing plate (30) substantially perpendicular thereto.

5. Device according to any one of the preceding claims, **characterised in that** the fixing part (30) can be fixed to the support (50) by a screw (54) that passes through a screw passage piercing provided in the fixing part and that is anchored to the support.

6. Device according to the preceding claim, **characterised in that** the positive-location means (36) is close to the screw passage piercing (32) provided in the fixing part (30).

7. Vehicle seat, **characterised in that** its squab structure comprises a support (50) equipped with a locking device for a safety belt according to any one of the preceding claims.

8. Vehicle, in particular a motor car, **characterised in that** it comprises at least one seat (10) according to the preceding claim, the locking device of which is lateral to the seat on the same side as the middle of the vehicle.

## Patentansprüche

1. Verriegelungsvorrichtung für einen Fahrzeugsicherheitsgurt, im Speziellen für ein Kraftfahrzeug, umfassend ein Gehäuse (14), das dazu bestimmt ist, einen Riegel (22) des Sicherheitsgurtes aufzunehmen und zu verriegeln, und das einen Abschnitt (30) umfasst, mit dem das Gehäuse (14) an einer Halterung (50) befestigt werden kann, die kraftschlüssig mit der Struktur eines Fahrzeugsitzes (10) oder des Fahrzeugbodens verbunden ist, wobei der Abschnitt (30) zur Befestigung des Gehäuses eine Vorrichtung zur Sicherung gegen Falscheinbau (36) umfasst, mit der der Abschnitt (30) zur Befestigung in nur einer einzigen Stellung im Bezug zur Halterung (50) angeordnet werden kann, in der die Befestigung an der Halterung (50) möglich ist, und in der das Gehäuse (14) zur Einführung und Verriegelung des Riegels (22) korrekt ausgerichtet ist, wobei der Befestigungsabschnitt (30) einerseits eine Auflagefläche (53) umfasst, die dazu bestimmt ist, sich bei der Befestigung des Abschnitts (30) auf der Halterung (50) an eine entsprechende Fläche (55) der Halterung (50) anzulegen, wobei die Vorrichtung zur Sicherung gegen Falscheinbau (36) zumindest ein Organ umfasst, das auf einer Seite des Befestigungsabschnitts (30) übersteht, die jener Seite gegenüberliegt, die die Auflagefläche (53) aufweist, und die die Befestigung auf der Halterung (50) durch die Umkehr des Befestigungsabschnittes (30) verhindert, **dadurch gekennzeichnet, dass** es eine abgewinkelte Positionierungslasche (34) des Befestigungsabschnitts (30) in Bezug zur Halterung (50) umfasst, die über die Auflagefläche (53) übersteht, und die in eine Aufnahme (52) eingeführt werden kann, die in die Halterung (50) eingelassen ist.

2. Vorrichtung nach Anspruch 1, **dadurch gekennzeichnet, dass** der Befestigungsabschnitt (30) eine ebene Platte (50) ist, und dadurch, dass das überstehende Organ (36) eine Lasche ist, die über die Fläche der Platte übersteht, die gegenüber der Fläche (53) jener Platte liegt, die dazu bestimmt ist, sich an der Halterung (50) anzulegen.

3. Vorrichtung nach dem vorherigen Anspruch, **dadurch gekennzeichnet, dass** die Lasche (36) über die Platte (30) übersteht, die in etwa normal zu selbiger steht.

4. Vorrichtung nach irgendeinem der Ansprüche 2 bis 3, **dadurch gekennzeichnet, dass** das überstehende Organ (36) zwei Laschen umfasst, die auf derselben Seite der Befestigungsplatte (30) überstehen, die in etwa normal zu selbiger steht.

5. Vorrichtung nach irgendeinem der vorherigen Ansprüche, **dadurch gekennzeichnet, dass** der Befestigungsabschnitt (30) durch eine Schraube (54) auf der Halterung (50) befestigt werden kann, die durch eine Durchgangsbohrung für die Schraube führt, die im Befestigungsabschnitt angeordnet ist, und die in der Halterung verankert ist.

6. Vorrichtung nach dem vorherigen Anspruch, **dadurch gekennzeichnet, dass** die Vorrichtung zur Sicherung gegen Falscheinbau (36) in der Nähe der Bohrung (32) zum Durchgang der Schraube liegt, die im Befestigungsabschnitt (30) angeordnet ist.

7. Fahrzeugsitz, **dadurch gekennzeichnet, dass** seine Sitzflächenstruktur eine Halterung (50) umfasst, die mit einer Verriegelungsvorrichtung für einen Sicherheitsgurt entsprechend irgendeinem der vorherigen Ansprüche ausgestattet ist.

8. Fahrzeug, im Speziellen ein Kraftfahrzeug, **dadurch gekennzeichnet, dass** es zumindest einen Sitz (10) entsprechend dem vorherigen Anspruch umfasst, dessen Verriegelungsvorrichtung seitlich am Sitz auf der Seite der Fahrzeugmitte liegt.
